(19) Europäisches Patentamt
European Patent Office
Office européen des brevets

(11) **EP 4 004 115 B1**

(12) **FASCICULE DE BREVET EUROPEEN**

(45) Date de publication et mention
de la délivrance du brevet:
**23.08.2023 Bulletin 2023/34**

(51) Classification Internationale des Brevets (IPC):
***C08L 83/04*** *(2006.01)*     ***C08J 9/00*** *(2006.01)*
***C08J 9/02*** *(2006.01)*

(21) Numéro de dépôt: **20753791.1**

(52) Classification Coopérative des Brevets (CPC):
(C-Sets disponibles)
**C08J 9/125; C08J 9/0066; C08L 83/04;**
C08G 77/12; C08G 77/20; C08J 2201/026;
C08J 2383/07      (Cont.)

(22) Date de dépôt: **23.07.2020**

(86) Numéro de dépôt international:
**PCT/FR2020/000211**

(87) Numéro de publication internationale:
**WO 2021/014058 (28.01.2021 Gazette 2021/04)**

(54) **COMPOSITION SILICONE POUR MOUSSE ÉLASTOMÈRE**

SILIKONZUSAMMENSETZUNG FÜR ELASTOMERSCHAUMSTOFF

SILICONE COMPOSITION FOR ELASTOMER FOAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2019 FR 1908451**

(43) Date de publication de la demande:
**01.06.2022 Bulletin 2022/22**

(73) Titulaire: **Elkem Silicones France SAS
69003 Lyon (FR)**

(72) Inventeurs:
 • **MARIOT, David
 69008 LYON (FR)**
 • **PELLE, Aurélie
 38070 SAINT-QUENTIN-FALLAVIER (FR)**
 • **DUBOIS, Julie
 32700 MARSOLAN (FR)**
 • **DERVIEUX-GOBET, Estelle
 69420 AMPUIS (FR)**

(74) Mandataire: **Menville, Laure
 Elkem Silicones France SAS
 9, rue Spécia
 69190 Saint-Fons (FR)**

(56) Documents cités:
**WO-A1-2008/096882     WO-A1-2012/032231
US-A- 5 436 274**

(52) Classification Coopérative des Brevets (CPC):
(Cont.)

C-Sets
**C08L 83/04, C08L 83/00, C08K 5/56, C08K 3/36**

**Description**

**Domaine technique**

La présente invention a trait à de nouvelles compositions organopolysiloxaniques réticulant par polyaddition, destinées à générer une mousse en élastomère silicone (appelée « mousse de silicone » ou « mousse silicone ») de faible densité, c'est à dire inférieure à 0,20 g/cm$^3$, et présentant de bonnes propriétés physiques, mécaniques et de tenue au feu.

L'expression « mousse de silicone » ou « mousse silicone » désigne une composition d'organopolysiloxanes sous la forme de mousse. Les matériaux en mousse silicone sont connus dans divers domaines d'application tels que l'isolation thermique et ou acoustique, la production de joints souples, l'utilisation comme éléments d'amortissement, etc. Ces applications utilisent les propriétés connues des élastomères silicone comme la stabilité thermique, de bonnes propriétés mécaniques et la résistance au feu.

L'industrie du transport est demandeuse de mousses silicones de faible densité tout en conservant d'excellentes propriétés mécaniques et de tenue au feu.

Les mousses de silicone sont bien connues dans la technique et leur préparation est décrite dans un certain nombre de brevets.

**Technique antérieure**

Il existe plusieurs techniques d'obtention des mousses silicones. Nous nous intéressons ici aux mousses silicones obtenues à partir de compositions silicones réticulant par polyaddition.

Dans le brevet US4189545, des mousses de silicone sont préparées à partir d'une composition réticulant par polyaddition comprenant un organopolysiloxane portant des groupes vinyle liés au silicium, un organopolysiloxane contenant des atomes d'hydrogène liés au silicium et de l'eau. L'eau réagit avec l'organopolysiloxane à fonction hydrures produisant ainsi de l'hydrogène gazeux et un silanol. Le silanol réagit alors avec l'organopolysiloxane à fonction hydrures par une réaction d'hydrogénocondensation générant ainsi une deuxième molécule d'hydrogène gazeux alors qu'un autre polydiorganosiloxane portant des groupes vinyle liés au silicium va simultanément réagir par une réaction d'addition avec un autre polydiorganosiloxane à fonction hydrure, participant ainsi à la construction du réseau de la mousse de silicone. L'apport principal apporté par cette technique est que l'hydrogène gazeux est produit sans addition de silanol dans la composition initiale et avec l'addition d'une petite quantité d'eau. La tenue au feu est améliorée par l'utilisation de quartz et de noir de carbone. La densité des mousses obtenues est élevée 0,4 g/cm$^3$ et il n'y a pas de mesures de propriétés mécaniques.

Dans le brevet US4590222 des mousses de silicone sont préparées à partir de compositions comprenant un organopolysiloxane linéaire portant des groupes vinyle liés au silicium, une résine organopolysiloxane portant des groupes vinyle liés au silicium, un catalyseur à base de platine, un organohydrogénosiloxane, un organopolysiloxane porteur de groupements hydroxyles sur les motifs bout de chaîne, une charge et un alcool organique. Dans ce cas, l'hydrogène gazeux est produit par réaction entre l'alcool organique et l'organohydrogénosiloxane.

Cependant, les techniques faisant usage d'alcool ou organopolysiloxanes porteur de groupement hydroxyles comme source d'agent porogène ont tendance à donner des mousses présentant des densités trop élevées pour de nombreuses applications, par exemple celles destinées pour l'industrie du transport, De plus, lorsqu'on réussit à diminuer la densité des mousses, cela se fait souvent au détriment des propriétés mécaniques comme par exemple la résistance à la rupture et la résistance au déchirement.

Une autre technique consiste à utiliser des agents ou des additifs porogènes, additionnés dans la matrice silicone, qui, sous l'action de la chaleur, expansent le matériau:

- soit par décomposition avec libération de gaz, cas notamment des dérivés de type azo, par exemple l'azodicarbonamide, qui va permettre de libérer de l'azote, du gaz carbonique et de l'ammoniaque. Ce type d'agent porogène, malgré le fait qu'il soit largement utilisé pour d'autres matériaux, pose de sérieux problèmes de toxicité (libération d'hydrazine),
- soit par changement de phase (liquide à gaz), cas notamment des solvants à faible point d'ébullition.

Enfin, une technique alternative consiste à introduire mécaniquement un gaz (par exemple de l'azote) dans la matrice silicone sous pression suivi d'un passage dans un mélangeur dynamique ce qui permet d'accéder à des mousses ayant de bonnes caractéristiques, mais elles nécessitent un équipement lourd et onéreux.

Une autre approche décrite par le brevet américain n° US4418157 décrit des compositions réticulant par polyaddition, précurseurs de mousses de silicone, comprenant une résine silicone de type « MQ » (nomenclature des silicones telle que décrite par exemple dans l'ouvrage de Walter NOLL "Chemistry and Technology of Silicones", Academic Press, 1968, 2ème édition, aux pages 1 à 9), comportant éventuellement des fonctions vinylées et de l'eau. L'addition de cette résine spécifique permet d'abaisser la densité de la mousse obtenue. Cependant, ce type de résine est une matière première coûteuse et dont la synthèse industrielle nécessite un équipement lourd et onéreux. Les mousses obtenues présentent une densité supérieure à 0,25 g/cm$^3$.

Un exemple d'une composition précurseur de mousse de silicone présentant une bonne tenue au feu est décrit dans la référence US6084002. La composition décrite comprend une base silicone réticulant par une réaction de polyaddition, un composé à fonction hydroxyle comme agent porogène et de la wollastonite. Les viscosités des compositions préparées dans les exemples sont toutes supérieures à 190 000 mPa.s et les densités des mousses obtenues sont comprises entre 0,20 g/cm$^3$ et 0,25 g/cm$^3$.

Une autre problématique rencontrée dans les mousses de l'art antérieur concerne les tailles et la distribution des tailles des bulles du matériau en mousse silicone. En effet, lorsque celles-ci sont trop importantes, elles entraînent une anisotropie des propriétés physiques suivant les points de mesure. Par « anisotrotrie des propriétés physiques » on entend une variation des valeurs mesurées suivant le point de mesure de la mousse silicone.

Par « bulles de petite taille» pour une mousse silicone, on entend des bulles dont la largeur (ou diamètre) est inférieure ou égale à environ 1mm, par « bulles de taille moyenne » la largeur (ou diamètre) est comprise entre 1 et 1,5 mm, alors que pour des « bulles de grosse taille » la largeur (ou diamètre) est supérieure à 1,5 mm.

### Problème technique

Malgré l'existence des nombreuses techniques citées ci-dessus, il existe toujours un besoin pour fournir l'industrie, et notamment l'industrie des transports, avec des mousses de silicones de faible densité, c'est-à-dire inférieure à 0,20 g/cm$^3$. Ces mousses silicones doivent par ailleurs être visuellement uniformes avec une distribution homogène des tailles des bulles au sein du matériau moussé, présenter de bonnes propriétés mécaniques, une excellente tenue au feu et ne pas dégager de fumées toxiques lors de leur combustion.

### Résumé de l'invention

La présente invention a donc pour objectif de fournir une nouvelle composition organopolysiloxanique destinée à générer, après réticulation et/ou durcissement, une mousse de silicone de faible densité, c'est à dire inférieure à 0,20 g/cm$^3$, avec des tailles de bulles dont la largeur ou le diamètre est inférieur ou égal à environ 2 mm et une distribution homogène des tailles des bulles au sein du matériau. Ces mousses silicones doivent également présenter de bonnes propriétés mécaniques, une excellente tenue au feu et ne pas dégager de fumées toxiques lors de leur combustion.

L'objet de l'invention concerne également un système bi-composant, tri-composant ou multi-composant présentant une bonne stabilité au stockage, précurseur de la composition organopolysiloxanique, capable de générer après sa réticulation et/ou durcissement une mousse silicone.

Un autre objet de l'invention est la mousse de silicone susceptible d'être obtenue par réticulation et/ou durcissement de la composition organopolysiloxanique présentant de bonnes propriétés mécaniques et de tenue au feu malgré une densité inférieure à 0,2 g/cm$^3$.

Un autre objet de l'invention est le procédé de préparation de la mousse silicone.

Un dernier objet de l'invention concerne l'utilisation de la mousse de silicone selon l'invention pour la préparation de mousses de remplissage ou de joints en mousse dans le domaine du bâtiment, du transport, de l'isolation électrique ou de l'électroménager

### Exposé de l'invention

La présente invention a donc pour objet une composition organopolysiloxanique **X**, précurseur d'une mousse silicone **M**, comprenant :

a. au moins un organopolysiloxane **A** présentant, par molécule, au moins deux groupes alcényles en C$_2$-C$_6$ liés au silicium,

b. au moins un organopolysiloxane **B** présentant, par molécule, au moins deux motifs SiH et de préférence au moins trois motifs SiH,

c. une quantité catalytiquement efficace d'au moins un catalyseur d'hydrosilylation **C**, qui est de préférence un composé dérivé d'au moins un métal appartenant au groupe du platine,

d. au moins un agent porogène **D** qui est l'eau ou une émulsion aqueuse,

e. au moins 3% en poids par rapport à la quantité totale de la composition **X** d'au moins une charge minérale **E** qui est une silice de combustion dont la surface spécifique est comprise entre 100 et 300 m$^2$/g,

f. au moins 6% en poids par rapport à la quantité totale de la composition **X** d'au moins une charge minérale **F** qui est un quartz broyé, et

g. au moins un additif de tenue thermique **J**,

caractérisée en ce que le ratio massique entre le quartz **F** et la silice de combustion **E** est compris entre 0,5 et 4.

Il est du mérite des inventeurs d'avoir mis au point une composition organopolysiloxanique **X** précurseur d'une mousse silicone **M** avec une dispersion homogène de la taille des bulles qui permet d'atteindre les objectifs précités : c'est-à-dire une densité inférieure à 0,20 g/cm$^3$, une excellente tenue au feu, de bonnes propriétés mécaniques telles que la résistance à la rupture ou au déchirement.

## Exposé détaillé de l'invention

L'organopolysiloxane **A** présentant, par molécule, au moins deux groupes alcényles, en C$_2$-C$_6$ liés au silicium, peut être notamment formé :

**[0024]** - d'au moins deux motifs siloxyle de formule suivante :

$$[\text{Math. 1}] : \quad Y_a R^1_b SiO_{\frac{(4-a-b)}{2}}$$

dans laquelle :

- Y est un alcényle en C$_2$-C$_6$, de préférence vinyle,
- R$^1$ est un groupe hydrocarboné monovalent ayant de 1 à 12 atomes de carbone, de préférence choisi parmi les groupes alkyles ayant de 1 à 8 atomes de carbone tels que les groupes méthyle, éthyle, propyle, les groupes cycloalkyles ayant de 3 à 8 atomes de carbone et les groupes aryle ayant de 6 à 12 atomes de carbone,
- a=1 ou 2, b=0, 1 ou 2 et la somme a+b=2 ou 3, et
- éventuellement de motifs de formule suivante :

$$[\text{Math. 2}] : \quad R^1_c SiO_{\frac{(4-c)}{2}}$$

dans laquelle R$^1$ a la même signification que ci-dessus et c = 2 ou 3.

De préférence, lesdits organopolysiloxanes **A** sont des huiles de viscosité dynamique comprise entre 100 et 100000 mPa.s, de préférence entre 100 et 80000 mPa.s à 25°C, et plus préférentiellement entre 1000 et 50000 mPa.s.

Sauf indication contraire, toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

Ces organopolysiloxanes **A** présentent une structure linéaire, essentiellement constitués de motifs siloxyles « D » choisis parmi le groupe constitué par les motifs siloxyles Y$_2$SiO$_{2/2}$, YR$^1$SiO$_{2/2}$ et R$^1_2$SiO$_{2/2}$, et de motifs siloxyles « M » terminaux choisis parmi le groupe constitué par les motifs siloxyles YR$^1_2$SiO$_{1/2}$, Y$_2$R$^1$SiO$_{1/2}$ et R$^1_3$SiO$_{1/2}$. Les symboles Y et R$^1$ sont tels que décrits ci-dessus.

A titre d'exemples de motifs «M» terminaux, on peut citer les groupes triméthylsiloxy, diméthylphénylsiloxy, diméthylvinylsiloxy ou diméthylhexènylsiloxy.

A titre d'exemples de motifs « D », on peut citer les groupes diméthylsiloxy, méthylphénylsiloxy, méthylvinylsiloxy, méthylbutènylsiloxy, méthylhexènylsiloxy, méthyldécènylsiloxy ou méthyldécadiènylsiloxy.

Des exemples d'organopolysiloxanes linéaires pouvant être des composés insaturés **A** selon l'invention sont :

- un poly(diméthylsiloxane) à extrémités diméthylvinylsilyles ;

- un poly(diméthylsiloxane-co-méthylphénylsiloxane) à extrémités diméthylvinylsilyles ;
- un poly(diméthylsiloxane-co-méthylvinylsiloxane) à extrémités diméthylvinylsilyles ;
- un poly(diméthylsiloxane-co-méthylvinylsiloxane) à extrémités triméthyl-silyles ; et
- un poly(méthylvinylsiloxane) cycliques.

De préférence, le composé organopolysiloxane **A** a une teneur massique en motif alcényle comprise entre 0,001 et 30%, de préférence entre 0,01 et 10%, de préférence entre 0,02 et 5%.

Dans la forme la plus recommandée, l'organopolysiloxane **A** contient des motifs diméthylvinylsilyles terminaux et encore plus préférentiellement l'organopolysiloxane **A** est un poly(diméthylsiloxane) à extrémités diméthylvinylsilyles.

La composition organopoysiloxanique **X** comprend de préférence de 40 à 80% en poids d'organopolysiloxane **A**, encore plus préférentiellement de 50 à 70% en poids d'organopolysiloxane **A**.

Selon un mode de réalisation, la composition organopolysiloxanique **X** ne comprend pas d'organopolysiloxanes branchés ou résines comprenant des motifs alcényles en $C_2$-$C_6$.

Le composé B est un composé organohydrogénopolysiloxane comprenant par molécule au moins deux et de préférence au moins trois fonctions hydrogénosilyles ou motifs Si-H,

L'organohydrogénopolysiloxane **B** peut avantageusement être un organopolysiloxane comprenant au moins deux, de préférence au moins trois, motifs siloxyles de formule suivante :

$$[\text{Math. 3}]: \quad H_d R^2_e SiO_{\frac{(4-d-e)}{2}}$$

dans laquelle :

- les radicaux $R^2$, identiques ou différents, représentent un radical monovalent ayant de 1 à 12 atomes de carbone,

- d =1 ou 2, e =0, 1 ou 2 et d+e =1, 2 ou 3 ;

et éventuellement d'autres motifs de formule suivante :

$$[\text{Math. 4}]: R^2_c SiO_{\frac{(4-f)}{2}}$$

dans laquelle $R^2$ a la même signification que ci-dessus, et f = 0, 1, 2, ou 3.

Il est entendu dans les formules [Math. 3] et [Math. 4] ci-dessus que, si plusieurs groupes $R^2$ sont présents, ils peuvent être identiques ou différents les uns des autres. Préférentiellement $R^2$ peut représenter un radical monovalent choisi dans le groupe constitué par les groupes alkyles ayant 1 à 8 atomes de carbone, éventuellement substitué par au moins un atome d'halogène tel que le chlore ou le fluor, les groupes cycloalkyles ayant de 3 à 8 atomes de carbone et les groupes aryles ayant de 6 à 12 atomes de carbone. $R^2$ peut avantageusement être choisi dans le groupe constitué par le méthyle, l'éthyle, le propyle, le 3,3,3-trifluoropropyle, le xylyle, le tolyle et le phényle.

Dans la formule [Math. 3], le symbole d est préférentiellement égal à 1.

L'organohydrogénopolysiloxane **B** peut présenter une structure linéaire, ramifiée, ou cyclique. Le degré de polymérisation est de préférence supérieur ou égal à 2. Généralement, il est inférieur à 5000.

Lorsqu'il s'agit de polymères linéaires, ceux-ci sont essentiellement constitués de motifs siloxyles choisis parmi les motifs de formules suivantes D :$R^2_2SiO_{2/2}$ ou D' :$R^2HSiO_{2/2}$, et de motifs siloxyles terminaux choisis parmi les motifs de formules suivantes M :$R^2_3SiO_{1/2}$ ou M' : $R^2_2HSiO_{1/2}$ où $R^2$ a la même signification que ci-dessus.

De préférence, la viscosité de l'organohydrogénopolysiloxane **B** est comprise entre 1 et 5000 mPa.s, plus préférentiellement entre 1 et 2000 mPa.s et encore plus préférentiellement entre 5 et 1000 mPa.s.

Des exemples d'organohydrogénopolysiloxanes pouvant être des composés **B** selon l'invention comprenant au moins deux atomes d'hydrogène lié à un atome de silicium sont :

- un poly(diméthylsiloxane) à extrémités hydrogénodiméthylsilyles;
- un poly(diméthylsiloxane-co-méthylhydrogénosiloxane) à extrémités triméthyl-silyles;
- un poly(diméthylsiloxane-co-méthylhydrogénosiloxane) à extrémités hydrogénodiméthylsilyles ;

- un poly(méthylhydrogénosiloxane) à extrémités triméthylsilyles ; et
- un poly(méthylhydrogénosiloxane) cyclique.

Lorsque l'organohydrogénopolysiloxane **B** présente une structure ramifiée, il est choisi de préférence parmi le groupe constitué par les résines silicones de formules suivantes :

- M'Q où les atomes d'hydrogène liés à des atomes de silicium sont portés par les groupes M,

- MM'Q où les atomes d'hydrogène liés à des atomes de silicium sont portés par une partie des motifs M,

- MD'Q où les atomes d'hydrogène liés à des atomes de silicium sont portés par les groupes D,

- MDD'Q où les atomes d'hydrogène liés à des atomes de silicium sont portés par une partie des groupes D,

- MM'TQ où les atomes d'hydrogène liés à des atomes de silicium sont portés par une partie des motifs M,

- MM'DD'Q où les atomes d'hydrogène liés à des atomes de silicium sont portés par une partie des motifs M et D,

- et leurs mélanges,

avec M,M', D et D' tels que définis précédemment, T :motif siloxyle de formule $R^2_3SiO_{1/2}$ et Q :motif siloxyle de formule $SiO_{4/2}$ où $R^2$ a la même signification que ci-dessus.

De préférence, le composé organohydrogénopolysiloxane **B** a une teneur massique en fonctions hydrogénosilyle Si-H comprise entre 0,2 et 91% plus préférentiellement entre 3 et 80% et encore plus préférentiellement entre 15 et 70%.

Avantageusement, le ratio molaire des fonctions hydrogénosilyles Si-H des composés **B** sur les fonctions alcènes des composés **A** est compris entre 5 et 100, de préférence entre 10 et 90, plus préférentiellement entre 15 et 65, et encore plus préférentiellement entre 20 et 55.

Une partie des fonctions hydrogénosilyles de l'organohydrogénopolysiloxane **B** vont réagir avec l'eau et former l'hydrogène gazeux permettant le bon moussage de la composition.

La composition organopoysiloxanique **X** comprend de préférence de 1 à 20% en poids d'organohydrogénopolysiloxane **B** et encore plus préférentiellement de 3 à 15% en poids.

Le catalyseur d'hydrosilylation **C** peut notamment être choisi parmi les composés du platine et du rhodium mais aussi parmi des composés de silicium comme ceux décrits dans les demandes de brevet WO2015004396 et WO2015004397, des composés de germanium comme ceux décrits dans les demandes de brevet WO2016075414 ou des complexes de nickel, cobalt ou fer comme ceux décrits dans les demandes de brevet WO2016071651, WO2016071652 et WO2016071654. Le catalyseur **C** est de préférence un composé dérivé d'au moins un métal appartenant au groupe du platine. Ces catalyseurs sont bien connus. On peut, en particulier, utiliser les complexes du platine et d'un produit organique décrit dans les brevets US-A-3 159 601, US A 3 159 602, US-A-3 220 972 et les brevets européens EP-A-0.057.459, EP A 0.188.978 et EP-A-0.190.530, les complexes du platine et d'organosiloxanes vinylés décrits dans les brevets US-A-3 419 593, US-A-3 715 334, US-A-3 377 432 et US A 3 814 730.

Préférentiellement, le catalyseur **C** est un composé dérivé du platine. Dans ce cas, la quantité pondérale de catalyseur **C**, calculée en poids de platine-métal, est généralement comprise entre 2 et 400 ppm massiques, de préférence entre 5 et 200 ppm basée sur le poids total de la composition **X**.

Préférentiellement le catalyseur **C** est un platine de Karstedt.

La composition organopolysiloxanique **X** précurseur d'une mousse silicone **M** comprend de l'eau ou une émulsion aqueuse comme agent porogène **D**. L'eau peut être ajoutée directement dans la composition **X**. Avantageusement l'eau peut être introduite sous la forme d'une émulsion aqueuse, par exemple une émulsion silicone directe huile-dans-eau ou une émulsion silicone inverse eau-dans-huile comprenant une phase continue huileuse silicone, une phase aqueuse et un stabilisant.

Selon un mode de réalisation, l'eau est introduite via une émulsion d'huile silicone dans l'eau avec une teneur en eau de l'ordre de 60% en poids. Lorsque l'eau est introduite dans la composition organopolysiloxanique **X** via une émulsion, la dispersion de l'eau dans la composition **X** et sa stabilité au stockage sont améliorés.

Préférentiellement, la composition organopolysiloxanique **X** comprend de 0,5 à 2,5% en poids d'agent porogène **D**.

Préférentiellement, la composition organopolysiloxanique **X** comprend de 0,3 à 1,2% en poids d'eau, plus préférentiellement de 0,4 à 1%.

La charge minérale est une silice de combustion **E** dont la surface spécifique est comprise entre 100 et 300

m$^2$/g. Avantageusement la surface de la silice de combustion a été préalablement traitée pour la rendre hydrophobe. Ce traitement peut être fait avec divers composés organosiliciques habituellement employés pour cet usage. Ainsi, ces composés organosiliciques peuvent être des organochlorosilanes, des diorganocyclopolysiloxanes, des hexaorganodisiloxanes, des hexaorganodisilazanes, des diorganopolysiloxanes ou des diorganocyclopolysilazanes (brevets français FR-A-1 126 884, FR-A-1 136 885, FR-A-1 236 505, brevet anglais GB-A-1 024 234).

Selon un mode de réalisation préféré la silice **E** est traitée lors du mélange avec tout ou partie de l'organopolysiloxane **A** selon un procédé in-situ.

Selon un mode de réalisation avantageux la silice **E** est traitée avec un ou plusieurs hexaorganodisilazanes. Encore plus préférentiellement, la silice **E** est traitée avec de l'hexaméthyldisilazane seul ou en mélange avec du divinyltétraméthyldisilazane.

Avantageusement la composition organopolysiloxanique **X** comprend entre 3 et 14% en poids de silice **E**, de préférence entre 3 et 12% et encore plus préférentiellement entre 4 et 9%. Une teneur en silice inférieure à 3% ne permet pas d'obtenir de bonnes propriétés mécaniques. Si la teneur en silice **E** est supérieure à 14%, la composition **X** présente une forte viscosité et la densité de la mousse **M** augmente.

La composition **X** selon invention contient également au moins une autre charge minérale qui est un quartz **F**. La combinaison de ces deux charges est nécessaire pour l'obtention d'une mousse **M** avec les propriétés recherchées.

Comme quartz **F**, il est utilisé de préférence un quartz naturel broyé avec une granulométrie moyenne inférieure à 10 microns. Le quartz **F** peut éventuellement être traité pour améliorer sa compatibilité avec les organopolysiloxanes.

Avantageusement la composition organopolysiloxanique **X** comprend entre 6 et 25% en poids de quartz **F**, préférentiellement entre 10 et 22% en poids, encore plus préférentiellement entre 13 et 20% en poids. Une teneur en quartz inférieure à 6% en poids ne permet pas d'obtenir une mousse avec une bonne résistance au feu. Si la teneur en quartz **F** est supérieure à 25%, les propriétés mécaniques de la mousse **M** obtenue après réticulation se dégradent.

Un paramètre clé de la composition organopolysiloxanique **X** pour obtenir une mousse M avec les propriétés souhaitées est le ratio massique Quartz/Silice.

Pour obtenir le compromis de propriétés souhaitées, c'est-à-dire une mousse silicone **M** avec une densité inférieure à 0,20 g/cm$^3$, une excellente tenue au feu et de bonnes propriétés mécaniques telles que la résistance à la rupture ou au déchirement, le ratio massique entre le quartz **F** et la silice de combustion **E** dans la composition **X** doit être compris entre 0,5 et 4.

Avantageusement, le ratio massique, entre le quartz **F** et la silice de combustion **E** dans la composition **X** est compris entre 1 et 3,6, plus avantageusement entre 1,5 et 3,2 et encore plus avantageusement entre 1,5 et 2,8.

La composition **X** selon l'invention comprend au moins un additif de tenue thermique **J**. Ces additifs de tenue thermique **J** sont bien connus de l'Homme de l'Art. Il peut être choisi avantageusement parmi le groupe constitué par : les sels, oxydes et hydroxydes de métaux tels que le fer, le titane, l'aluminium, le nickel et le cuivre; les sels, hydroxydes et oxydes de terres rares tels que le cérium et le lanthane, les composés organophosphorés, les dérivés du platine, le noir de carbone et les silicates de calcium, aluminium et/ou potassium tels que par exemple le mica et la wollastonite.

De préférence l'additif de tenue thermique **J** est choisi parmi le groupe constitué par : les sels, oxydes et hydroxydes de fer, titane ou aluminium, les sels, hydroxydes et oxydes de cérium et le lanthane, le noir de carbone, le mica et la wollastonite.

Encore plus préférentiellement, l'additif de tenue thermique est choisi parmi le groupe constitué par : les sels, oxydes et hydroxydes de titane, les sels, hydroxydes et oxydes de cérium, le noir de carbone, le mica et la wollastonite.

De préférence, la composition **X** selon l'invention comprend de 0,4 à 5% en poids d'additifs de tenue thermique **J** et plus préférentiellement entre 0,5 et 3% en poids.

Selon un mode de réalisation, la composition **X** selon l'invention comprend également une gomme diorganopolysiloxane **G** comprenant au moins deux groupes alcényles en C$_2$-C$_6$ liés au silicium. Les gommes diorganopolysiloxaniques **G** sont des polymères linéaires, de poids moléculaire élevé avec une viscosité supérieure à 1000 Pa.s à 25° C, de préférence supérieure à 2000 Pa.s et dont la chaîne diorganopolysiloxane est constituée essentiellement des motifs de formule R$_2$Si$_{2/2}$ et bloquée à chaque extrémité par des motifs de formule R$_3$SiO$_{1/2}$, le radical R représente un radical alkyle ayant de 1 à 8 atomes de carbone ou un radical alcényle ayant de 2 à 6 atomes de carbone. La présence, le long de la chaîne diorganopolysiloxane, de faibles quantités de motifs autres que R$_2$Si$_{2/2}$, par exemple de motifs RSi$_{3/2}$ et/ou SiO$_{4/2}$, n'est cependant pas exclue dans la proportion d'au plus 2 % par rapport au nombre de motifs R$_2$Si$_{2/2}$.

Avantageusement, la gomme diorganopolysiloxane **G** présente une teneur massique en motifs vinylés supérieure à 0,3% et de préférence supérieure à 0,5%. De préférence, la gomme diorganopolysiloxane **G** présente une teneur massique en motifs vinylés comprise entre 0,5 et 6%, plus préférablement entre 0,5 et 4% et encore plus préférablement entre 1 et 3,5%.

Selon un mode de réalisation, la composition **X** selon l'invention comprend de 0 à 4% en poids d'une gomme diorganopolysiloxane **G** et plus préférentiellement entre 0,5 et 3% en poids.

La composition **X** selon invention peut comprendre également d'autres composants tels que :

- une huile **H** diorganopolysiloxanique bloquée à chaque extrémité de sa chaîne par un motif triorganosiloxy dont les radicaux organiques liés aux atomes de silicium, sont choisis parmi les radicaux alkyles ayant de 1 à 8 atomes de carbone,
- un inhibiteur de réticulation **I**,
- une base colorante et
- d'autres charges.

L'inhibiteur de réticulation **I** (ou ralentisseur de la réaction d'addition) peut, quant à lui, être choisi parmi les composés suivants :

- un organopolysiloxane, avantageusement cyclique, et substitué par au moins un alcényle, le tétraméthylvinyltétrasiloxane étant particulièrement préféré,

- la pyridine,

- les phosphines et les phosphites organiques,

- les amides insaturées,

- les maléates alkylés, et

- les alcools acétyléniques,

Avantageusement, l'inhibiteur **I** est un alcool acétylénique de formule

$$(R^1)(R^2)C(OH)\text{-}C{=}CH$$

formule dans laquelle :

- $R^1$ est un radical alkyle linéaire ou ramifié, ou un radical phényle ;
- $R^2$ est un atome d'hydrogène, un radical alkyle linéaire ou ramifié, ou un radical phényle ;
- les radicaux $R^1$, $R^2$ et l'atome de carbone situé en alpha de la triple liaison pouvant éventuellement former un cycle ; et
- le nombre total d'atomes de carbone contenus dans $R^1$ et $R^2$ étant d'au moins 5, de préférence de 9 à 20.

Lesdits alcools sont, de préférence, choisis parmi ceux présentant un point d'ébullition supérieur à 250°C. On peut citer à titre d'exemples, les produits suivants qui sont disponibles commercialement:

- le 1-éthynyl-1-cyclohexanol ;

- le méthyl-3 dodécyne-1 ol-3 ;

- le triméthyl-3,7,11 dodécyne-1 ol-3 ;

- le diphényl-1,1 propyne-2 ol-1 ;

- l'éthyl-3 éthyl-6 nonyne-1 ol-3 et

- le méthyl-3 pentadécyne-1 ol-3.

Selon le procédé mis en oeuvre pour produire la mousse silicone **M**, la présence de l'inhibiteur peut être nécessaire ou pas. Si besoin, un tel inhibiteur de réticulation est présent à raison de 3000 ppm au maximum, de préférence à raison de 100 à 2000 ppm par rapport au poids total de la composition organopolysiloxanique **X**,

Avantageusement, l'inhibiteur de réticulation **I** est le 1-éthynyl-1-cyclohexanol.

Comme autres charges, on peut rajouter à la composition organopolysiloxanique **X**, des charges minérales ignifugeantes pour améliorer la tenue au feu telles que par exemple des charges minérales hydratés, des oxydes ou carbonates de calcium ou magnésium. De préférence les charges minérales hydratées sont à base de calcium, magnésium, ou aluminium telles que l'hydroxyde de magnésium $Mg(OH)_2$, l'hydroxyde d'aluminium $Al(OH)_3$, l'hydromagnésite de formule brute $Mg_5(CO_3)(OH)_4H_2O$, et l'hydroxyde de calcium. Selon un autre mode de réalisation, on pourra rajouter à la composition organopolysiloxanique **X** des microsphères de verre creuses.

Selon un mode de réalisation, la composition organopolysiloxanique **X** comprend :

a. de 40 à 80% en poids d'au moins un organopolysiloxane **A** présentant, par molécule, au moins deux groupes alcényles en $C_2$-$C_6$ liés au silicium,

b. de 1 à 20% d'au moins un organopolysiloxane **B** présentant, par molécule, au moins deux motifs SiH et de préférence au moins trois motifs SiH,

c. de 2 à 400 ppm massiques de platine métal,

d. de 0,3 à 2,5% en poids d'un agent porogène **D** qui est l'eau ou une émulsion aqueuse,

e. au moins 3% en poids par rapport à la quantité totale de la composition **X** d'au moins une charge minérale **E** qui est une silice de combustion dont la surface spécifique est comprise entre 100 et 300 $m^2$/g,

f. au moins 6% en poids par rapport à la quantité totale de la composition **X** d'au moins une charge minérale **F** qui est un quartz broyé, et

g. de 0,4 à 5% en poids d'au moins un additif de tenue thermique **J**.

Selon un autre mode de réalisation, la composition organopolysiloxanique **X** comprend :

a. de 40 à 80% en poids d'au moins un organopolysiloxane **A** présentant, par molécule, au moins deux groupes alcényles en $C_2$-$C_6$ liés au silicium,

b. de 1 à 20% en poids d'au moins un organopolysiloxane **B** présentant, par molécule, au moins deux motifs SiH et de préférence au moins trois motifs SiH,

c. de 2 à 400 ppm massiques de platine métal,

d. de 0,3 à 2,5% en poids d'un agent porogène **D** qui est l'eau ou une émulsion aqueuse,

e. de 3% à 14% en poids d'au moins une charge minérale **E** qui est une silice de combustion dont la surface spécifique est comprise entre 100 et 300 $m^2$/g,

f. de 6% à 25% en poids par rapport à la quantité totale de la composition **X** d'au moins une charge minérale **F** qui est un quartz broyé,

g. de 0,4 à 5% en poids d'au moins un additif de tenue thermique **J**,

h. de 0 à 3000 ppm massiques d'un inhibiteur de réticulation **I**, et

i. de 0 à 4% en poids d'une gomme diorganopolysiloxane **G** comprenant au moins deux groupes alcényle en $C_2$-$C_6$ liés au silicium.

Un autre objet de l'invention est un système bi-composant **P** précurseur de la composition organopolysiloxanique **X** telle que définie selon l'une quelconque des revendications précédentes et comprenant les constituants **A, B, C, D, E, F et J** tels que définis selon l'une quelconque des revendications précédentes, ledit système bi-composant **P** étant caractérisé en ce qu'il se présente en deux parties **P1** et **P2** distinctes destinées à être mélangées pour former ladite composition organopolysiloxanique **X** et comprenant lesdits constituants, et l'une des parties **P1** ou **P2** comprend le catalyseur **C** et l'agent porogène **D** et ne comprend pas l'organopolysiloxane **B**.

L'objet de l'invention concerne également un système tri-composant **T** précurseur de la composition organopolysiloxanique **X** telle que définie selon l'une quelconque des revendications précédentes et comprenant les constituants **A, B, C, D, E F et J** tels que définis selon l'une quelconque des revendications précédentes, ledit système tri-composant **T** étant caractérisé en ce qu'il se présente en trois parties **T1**, **T2** et **T3** distinctes destinées à être mélangées pour former ladite composition organopolysiloxanique **X** et comprenant lesdits constituants, et

- l'une des parties **T1**, **T2** ou **T3** comprend le catalyseur **C** et ne comprend pas l'agent porogène **D** ni l'organopolysiloxane **B**,

- l'une des parties **T1, T2** ou **T3** comprend l'agent porogène **D** et ne comprend pas le catalyseur **C** ni l'organopolysiloxane **B,**

- l'une des parties **T1**, **T2** ou **T3** comprend l'organopolysiloxane **B** et ne comprend pas le catalyseur **C** ni l l'agent porogène **D**.

D'autres systèmes multi-composants peuvent être prévus pour améliorer la durée de stockage et/ou optimiser la viscosité de chacun des composants,Selon un mode de réalisation, il peut être intéressant de déparer les additifs de tenue thermique **J** des autres composants et notamment du catalyseur **C**.

Avantageusement, la viscosité de la composition organopolysiloxanique **X** selon l'invention est inférieure à 50000 mPa.s et de préférence inférieure à 40000 mPa.s. Comme il s'agit d'une composition comprenant des charges la viscosité de la composition **X** est mesurée selon la méthode suivante. Les mesures de viscosité sont réalisées avec un rhéomètre Haake à 25°C, équipé d'un mobile cône-plan avec un angle de 1° et un diamètre de 20 mm. L'écart entre le cône et le plan est de 0.053 mm. Un échantillon de quelques gouttes de produit est déposé sur le plan puis soumis à une augmentation de la contrainte de cisaillement qui varie de 0 à 20 s$^{-1}$ en 120 secondes puis de 20 à 0 s$^{-1}$ en 120 s. La lecture de la viscosité se fait à 10s$^{-1}$ lors de la diminution de la contrainte de cisaillement.

Un autre objet de l'invention concerne le procédé de préparation de la mousse silicone **M** comprenant les étapes suivantes :

a- fournir un système bi-composant **P**, tri-composant **T** ou multi-composant comprenant l'ensemble des composants de la composition organopolysiloxanique **X** telle que définie ci-dessus,

b- mélanger les deux parties dudit système bi-composant **P** ou les trois parties dudit système tri-composant **T** ou l'ensemble des parties du système multi-composant pour obtenir la composition organopolysiloxanique **X** et

c- laisser réticuler et/ou durcir ladite composition organopolysiloxanique **X** pour obtenir la mousse silicone **M.**

Lors de l'étape b), le mélange a lieu à température proche de la température ambiante, c'est-à-dire entre 10 et 40 °C. Une augmentation de la température de la composition **X** est parfois observée lors de cette étape b) selon le type de mélangeur et le cisaillement appliqué.

Si l'on souhaite accélérer la réticulation ou durcissement de la mousse silicone **M** on peut réaliser l'étape b) à une température plus élevée, avantageusement entre 40 et 70°C.

L'étape b) peut s'effectuer via un mélangeur dynamique basse pression directement dans un moule ou dans une cuve agitée puis ensuite verser la composition **X** obtenue dans un moule. Le moule où la réticulation et durcissement a lieu peut être par la suite, fermé ou pas.

Il est important d'avoir une bonne qualité de mélange pour obtenir une mousse silicone **M** homogène avec de bonnes propriétés mécaniques.

L'étape c) peut avoir une durée variable en fonction de la composition **X** et de la température de l'étape b). Généralement, une mousse de silicone **M** avec de bonnes propriétés est obtenue après quelques minutes ou quelques heures en fonction de la température et de la concentration en catalyseur et en inhibiteur dans la composition **X**,

Avantageusement, l'ensemble du procédé de fabrication de la mousse **M** a lieu sous balayage d'air ou d'azote pour éviter les risques liés au dégagement d'hydrogène pendant le procédé.

Eventuellement, la mousse **M** obtenue à l'étape 3) peut subir une étape de recuisson. Ceci consiste en un traitement thermique d'une durée de 1 à plusieurs heures, de préférence de 1 à 4 heures, à une température comprise entre 50 et 200°C, de préférence entre 100 et 150°C. Cette étape de recuisson peut permettre d'améliorer, si nécessaire, la tenue au feu et les propriétés mécaniques de la mousse silicone **M**.

Un autre objet de l'invention est la mousse de silicone **M** obtenue par réticulation et/ou durcissement de la composition organopolysiloxanique **X** telle que définie ci-dessus.

La présente invention concerne aussi l'utilisation de la composition organopolysiloxanique **X** telle que définie ci-dessus ou de la mousse de silicone **M** telle que définie ci-dessus pour la préparation de mousses de remplissage ou d'étanchéification ainsi que des joints en mousse dans le domaine du bâtiment, du transport, de l'isolation électrique ou de l'électroménager.

Dans le domaine du transport, notamment ferroviaire, cette mousse de silicone **M** peut être employée comme matériel de capitonnage pour les sièges.

**Exemples**

Matières premières : les composés suivants ont été utilisés dans les exemples.

Organopolysiloxanes vinylés - Pour l'ensemble des exemples le symbole Vi indique le radical vinyle, a1 : Mélange de polydiméthylsiloxanes bloqués par des motifs $(CH_3)_2ViSiO_{1/2}$ et dont la viscosité est comprise entre de 3500 et 20000 mPa.s à 25°C.

Organohydrogénopolysiloxanes

b1 : huile polyméthylhydrogénosiloxane bloquée par des motifs $(CH_3)_3SiO_{1/2}$ dont la viscosité est de 30 mPa.s à 25°C

c1 : Catalyseur au platine de Karstedt.

d1 : Emulsion silicone contenant environ 59,5% en poids d'eau.

Silices de combustion

f1: Silice de combustion ayant une surface spécifique de 300 $m^2$/g traitée avec un mélange d'héxamethyldisilazane et de divinyltétraméthyldisilazane.

f2: Silice de combustion ayant une surface spécifique de 300$m^2$/g traitée avec de l'héxamethyldisilazane.

Quartz

q1 : Quartz SIKRON E600® : quartz broyé dont la moitié des particules ont une taille inférieure ou égale à 4 microns.

Gomme organopolysiloxane

g1: Gomme diorganopolysiloxane constituée essentiellement de motids diméthylsiloxane et méthylvinylsiloxane comprenant 2.4 % poids de motifs vinyle

i1 :Mélange d'additifs pour tenue thermique et résistance au feu comprenant un mélange d'oxyde de titane, de mica et d'hydroxyde de cérium.

Inhibiteur j : solution contenant 1% d'ethynylcyclohexanol dans une huile polydiméthylsiloxane bloqué par des motifs $(CH_3)_2(Vi)SiO_{1/2}$, ayant une viscosité de 600 mPa.s à 25°C

Le tableau 1 ci-après décrit les compositions testées.

Description du déroulement des essais : pour l'ensemble des essais la silice est mélangée au préalable avec une partie de l'organopolysiloxane vinylé. A ce mélange est rajouté de l'hexamethyldisilazane, éventuellement du divinyltétraméthyldisilazane et de l'eau. Le mélange ainsi obtenu est mélangé à chaud pendant deux heures puis soumis à une dévolatilisation. C'est ce qu'on connaît comme traitement hydrophobisant de la silice in situ.

Ensuite les différents composants pour compléter les formulations décrites dans le tableau 1 ci-après sont ajoutés et mélangés à température ambiante. Le moussage démarre rapidement après mélange manuel à l'aide d'une perceuse munie d'un mélangeur mécanique à 23 °C pendant 30 secondes environ. Le mélange est ensuite versé dans un moule.

Pour certains essais, une étape de recuisson pendant 2 heures à 140°C est réalisée.

Les mousses obtenues sont caractérisés selon les tests décrits ci-après,

Dans le présent exposé les abréviations « RIR », « AIR » et « R/d » représentent respectivement la résistance à la rupture en MPa, l'allongement à la rupture en % et la résistance à la déchirure en MPa selon la norme AFNOR NF T 46002.

Mesure de l'indice limite d'oxygène ILO ou « LOI » en anglais (limiting oxygen index). Cet indice correspond à la proportion minimale en dioxygène $(O_2)$ exprimée en % d'un mélange d'essai $(O_2 + N_2)$ nécessaire pour entretenir

la combustion d'un échantillon vers le bas, à la manière d'une bougie.

L'échantillon, à température ambiante, plongé dans un courant de mélange gazeux dans une cheminée de test, est mis au contact d'une flamme. La teneur en $O_2$ est réduite jusqu'à obtenir le niveau critique correspondant au ILO. L'atmosphère normale contient environ 21 % d'$O_2$. Si le ILO d'une matière est supérieur à ce taux, elle est dite auto-extinguible ; dans le cas contraire, elle est inflammable. Ce test permet de comparer la tenue au feu des différentes mousses silicones. Nous souhaitons obtenir des mousses silicones avec un ILO élevé ce qui représente une bonne tenue au feu.

Le tableau 2 ci-après présente les propriétés des différentes mousses silicones obtenues.

[Tableau 1]

| % poids | Exemple 1 | Exemple 2 | Exemple 3 | Comparatif 1 | Exemple 4 | Exemple 5 | Comparatif2 | Comparatif 3 |
|---|---|---|---|---|---|---|---|---|
| a1 | 60,7 | 59,3 | 59,3 | 74,1 | 56,2 | 56,5 | 62,4 | 65,7 |
| b1 | 12 | 12 | 12 | 12 | 12 | 12 | 12 | 12 |
| c1 | 0,04 | 0,04 | 0,04 | 0,04 | 0,04 | 0,04 | 0,04 | 0,04 |
| d1 | 1,15 | 1,15 | 1,15 | 1,15 | 1,15 | 1,15 | 1,15 | 1,15 |
| f1 | 0 | 0 | 1,53 | 1,53 | 0 | 1,53 | 0 | 0 |
| f2 | 6,5 | 6,5 | 5,1 | 5,1 | 9,4 | 4,0 | 3,3 | 0 |
| g1 | 0 | 1,5 | 1,5 | 1,5 | 1,5 | 1,5 | 1,5 | 1,5 |
| q1 | 15 | 15 | 15 | 0 | 15 | 18,8 | 15 | 15 |
| i1 | 3,7 | 3,7 | 3,7 | 3,7 | 3,7 | 3,7 | 3,7 | 3,7 |
| j1 | 0,8 | 1,0 | 1,0 | 0,8 | 1,0 | 0,7 | 1,0 | 1,0 |
| **Ratio quartz/SiO$_2$** | **2,3** | **2,3** | **2,3** | **0** | **1,6** | **3,4** | **4,6** | **n.d.** |
| n.d. non déterminé | | | | | | | | |

[Tableau 2]

| | Exemple 1 | Exemple 2 | Exemple 3 | Comparatif 1 | Exemple 4 | Exemple 5 | Comparatif 2 | Comparatif 3 |
|---|---|---|---|---|---|---|---|---|
| Densité (g/cm3) | 0,14 | 0,15 | 0,14 | 0,13 | 0,14 | 0,17 | 0,13 | n.d. |
| R/D (MPa) | 0,33 | 0,38 | 0,31 | 0,24 | 0,34 | 0,39 | 0,27 | n.d. |
| R/R (MPa) | 0,038 | 0,045 | 0,041 | 0,033 | 0,038 | 0,05 | 0,035 | n.d. |
| A/R (%) | 60 | 70 | 60 | 80 | 55 | 55 | 70 | n.d. |
| ILO | 36 | 34 | 33 | 30 | 35 | 34 | 33 | n.d. |
| Taille bulles | 5 | 2 | 2 | 3 | 2 | 3 | 3 | n.d. |

n.d. non déterminé

La taille des bulles est caractérisée par des valeurs entre 1 et 5. 1 correspond à la plus petite taille des bulles et 5 à la plus importante. Par « bulles de petite taille», on entend des tailles de bulle dont la largeur ou le diamètre est inférieur ou égal à environ 1mm (cotation 2 ou 3 dans le tableau ci-dessous), alors que pour des « bulles de grosse taille » la largeur ou le diamètre est de l'ordre de 1,5 mm (cotation 5).

Les essais comparatifs réalisés montrent :

- qu'en absence de quartz, la tenue au feu des mousses silicones obtenues est faible malgré la présence d'additifs de tenue thermique et la résistance à la déchirure est inférieure à 0,3 MPa (comparatif 1),

- qu'en absence de silice, la réticulation et le moussage de la composition ne se font pas correctement. La mousse s'est déchirée et il n'y a pas de partie suffisamment homogène pour réaliser des mesures (comparatif 3),

- un ratio massique quartz/silice supérieur à 4 conduit à des propriétés mécaniques plus faibles, résistance à la déchirure inférieure à 0,3 MPa (comparatif 2).

Les exemples 1 à 5 montrent que les compositions selon l'invention permettent d'obtenir une mousse silicone M avec un compromis de propriétés tout à fait satisfaisant, à savoir, une faible densité, de bonnes propriétés mécaniques et une bonne tenue au feu.

**Revendications**

1. Composition organopolysiloxanique **X,** précurseur d'une mousse silicone **M**, comprenant :

   a. au moins un organopolysiloxane **A** présentant, par molécule, au moins deux groupes alcényles en $C_2$-$C_6$ liés au silicium,
   b. au moins un organopolysiloxane **B** présentant, par molécule, au moins deux motifs SiH et de préférence au moins trois motifs SiH,
   c. une quantité catalytiquement efficace d'au moins un catalyseur d'hydrosilylation **C,** qui est de préférence un composé dérivé d'au moins un métal appartenant au groupe du platine,
   d. au moins un agent porogène **D** qui est l'eau ou une émulsion aqueuse,
   e. au moins 3% en poids par rapport à la quantité totale de la composition **X** d'au moins une charge minérale **E** qui est une silice de combustion dont la surface spécifique est comprise entre 100 et 300 $m^2$/g,
   f. au moins 6% en poids par rapport à la quantité totale de la composition **X** d'au moins une charge minérale **F** qui est un quartz broyé, et
   g. au moins un additif de tenue thermique **J,**

   **caractérisée en ce que** le ratio massique entre le quartz **F** et la silice de combustion **E** est compris entre 0,5 et 4.

2. Composition organopolysiloxanique **X** selon la revendication 1 dans laquelle la quantité de charge minérale **E** est comprise entre 3 et 14% poids de ladite composition **X.**

3. Composition organopolysiloxanique **X** selon la revendication 1 dans laquelle la quantité de charge minérale **F** est comprise entre 6 et 25% poids de ladite composition **X.**

4. Composition organopolysiloxanique **X** selon la revendication 1 dans laquelle le ratio massique entre le quartz **F** et la silice de combustion **E** est compris entre 1 et 3,6.

5. Composition organopolysiloxanique **X** selon la revendication 1 comprenant en outre une gomme organopolysiloxane **G** comprenant au moins deux groupes alcényles en $C_2$-$C_6$ liés au silicium.

6. Composition organopolysiloxanique **X** selon la revendication 1 comprenant en outre un inhibiteur **I.**

7. Composition organopolysiloxanique **X** selon la revendication 1 comprenant :

   a. de 40 à 80% en poids d'au moins un organopolysiloxane **A** présentant, par molécule, au moins deux groupes alcényles en $C_2$-$C_6$ liés au silicium,
   b. de 1 à 20% d'au moins un organopolysiloxane **B** présentant, par molécule, au moins deux motifs SiH et de préférence au moins trois motifs SiH,

c. de 2 à 400 ppm massiques de platine métal,

d. de 0,3 à 2,5% en poids d'un agent porogène **D** qui est l'eau ou une émulsion aqueuse,

e. au moins 3% en poids par rapport à la quantité totale de la composition **X** d'au moins une charge minérale **E** qui est une silice de combustion dont la surface spécifique est comprise entre 100 et 300 $m^2$/g,

f. au moins 6% en poids par rapport à la quantité totale de la composition **X** d'au moins une charge minérale **F** qui est un quartz broyé, et

g. de 0,4 à 5% en poids d'au moins un additif de tenue thermique **J**.

8. Composition organopolysiloxanique X selon la revendication 1 comprenant :

a. de 40 à 80% en poids d'au moins un organopolysiloxane **A** présentant, par molécule, au moins deux groupes alcényles en $C_2$-$C_6$ liés au silicium,

b. de 1 à 20% en poids d'au moins un organopolysiloxane **B** présentant, par molécule, au moins deux motifs SiH et de préférence au moins trois motifs SiH,

c. de 2 à 400 ppm massiques de platine métal,

d. de 0,3 à 2,5% en poids un agent porogène **D** qui est l'eau ou une émulsion aqueuse,

e. de 3% à 14% en poids d'au moins une charge minérale **E** qui est une silice de combustion dont la surface spécifique est comprise entre 100 et 300 $m^2$/g,

f. de 6% à 25% en poids par rapport à la quantité totale de la composition **X** d'au moins une charge minérale **F** qui est un quartz broyé,

g. de 0,4 à 5% en poids d'au moins un additif de tenue thermique **J**,

h. de 0 à 3000 ppm massiques d'un inhibiteur de réticulation **I**, et

i. de 0 à 4% en poids d'une gomme diorganopolysiloxane **G** comprenant au moins deux groupes alcényles en $C_2$-$C_6$ liés au silicium.

9. Système bi-composant **P** précurseur de la composition organopolysiloxanique **X** telle que définie selon l'une quelconque des revendications précédentes et comprenant les constituants **A, B, C, D, E, F et J** tels que définis selon l'une quelconque des revendications précédentes, ledit système bi-composant **P** étant **caractérisé en ce qu'**il se présente en deux parties **P1** et **P2** distinctes destinées à être mélangées pour former ladite composition organopolysiloxanique **X** et comprenant lesdits constituants, et **en ce que** l'une des parties **P1** ou **P2** comprend le catalyseur **C** et l'agent porogène **D** et ne comprend pas l'organopolysiloxane **B**.

10. Mousse de silicone **M** obtenue par réticulation et/ou durcissement de la composition organopolysiloxanique **X** telle que définie selon l'une quelconque des revendications 1 à 8.

11. Procédé de préparation de la mousse silicone **M** comprenant les étapes suivantes :

a) fournir un système bi-composant **P**, tri-composant **T** ou multi-composant comprenant l'ensemble des composants de la composition organopolysiloxanique **X** telle que définie selon les revendications 1 à 8,

b) mélanger les deux parties dudit système bi-composant **P** ou les trois parties dudit système tri-composant **T** ou l'ensemble des parties du système multi-composant pour obtenir la composition organopolysiloxanique **X** et

c) laisser réticuler et/ou durcir ladite composition organopolysiloxanique **X** pour obtenir la mousse silicone **M**.

12. Utilisation de la composition organopolysiloxanique **X** selon l'une quelconque des revendications 1 à 8 ou de la mousse de silicone **M** selon la revendication 10 pour la préparation de mousses de remplissage ou de joints en mousse dans le domaine du bâtiment, du transport, de l'isolation électrique ou de l'électroménager.

**Patentansprüche**

1. Organopolysiloxanzusammensetzung **X**, die ein Vorläufer für einen Silikonschaumstoff **M** ist, umfassend:

a. mindestens ein Organopolysiloxan **A** mit mindestens zwei siliciumgebundenen $C_2$-$C_6$-Alkenylgruppen pro Molekül,

b. mindestens ein Organopolysiloxan **B** mit mindestens zwei SiH-Einheiten und vorzugsweise mindestens drei SiH-Einheiten pro Molekül,

c. eine katalytisch wirksame Menge mindestens eines Hydrosilylierungskatalysators **C**, bei dem es sich vorzugsweise um eine Verbindung handelt, die sich von mindestens einem Metall der Platingruppe ableitet,

d. mindestens einen Porenbildner **D**, bei dem es sich um Wasser oder eine wässrige Emulsion handelt,

e. mindestens 3 Gew.-%, bezogen auf die Gesamtmenge der Zusammensetzung **X**, mindestens eines mineralischen Füllstoffs **E**, bei dem es sich um eine pyrogen hergestellte Kieselsäure mit einer spezifischen Oberfläche zwischen 100 und 300 $m^2$/g handelt,

f. mindestens 6 Gew.-%, bezogen auf die Gesamtmenge der Zusammensetzung **X**, mindestens eines mineralischen Füllstoffs **F**, bei dem es sich um einen gemahlenen Quarz handelt, und

g. mindestens ein Wärmebeständigkeitsadditiv **J**,

**dadurch gekennzeichnet, dass** das Gewichtsverhältnis zwischen dem Quarz **F** und der pyrogen hergestellten Kieselsäure **E** zwischen 0,5 und 4 liegt.

2. Organopolysiloxanzusammensetzung **X** nach Anspruch 1, wobei die Menge des mineralischen Füllstoffs **E** zwischen 3 und 14 Gew.-% der Zusammensetzung **X** liegt.

3. Organopolysiloxanzusammensetzung **X** nach Anspruch 1, wobei die Menge des mineralischen Füllstoffs **F** zwischen 6 und 25 Gew.-% der Zusammensetzung **X** liegt.

4. Organopolysiloxanzusammensetzung **X** nach Anspruch 1, wobei das Gewichtsverhältnis zwischen dem Quarz **F** und der pyrogen hergestellten Kieselsäure **E** zwischen 1 und 3,6 liegt.

5. Organopolysiloxanzusammensetzung **X** nach Anspruch 1, ferner umfassend einen Organopolysiloxangummi **G** mit mindestens zwei siliciumgebundenen $C_2$-$C_6$-Alkenylgruppen.

6. Organopolysiloxanzusammensetzung **X** nach Anspruch 1, ferner umfassend einen Inhibitor **I**.

7. Organopolysiloxanzusammensetzung **X** nach Anspruch 1, umfassend:

a. 40 bis 80 Gew.-% mindestens eines Organopolysiloxans **A** mit mindestens zwei siliciumgebundenen $C_2$-$C_6$-Alkenylgruppen pro Molekül,

b. 1 bis 20 % mindestens eines Organopolysiloxans **B** mit mindestens zwei SiH-Einheiten und vorzugsweise mindestens drei SiH-Einheiten pro Molekül,

c. 2 bis 400 Gew.-ppm Platinmetall,

d. 0,3 bis 2,5 Gew.-% mindestens eines Porenbildners **D**, bei dem es sich um Wasser oder eine wässrige Emulsion handelt,

e. mindestens 3 Gew.-%, bezogen auf die Gesamtmenge der Zusammensetzung **X**, mindestens eines mineralischen Füllstoffs **E**, bei dem es sich um eine pyrogen hergestellte Kieselsäure mit einer spezifischen Oberfläche zwischen 100 und 300 $m^2$/g handelt,

f. mindestens 6 Gew.-%, bezogen auf die Gesamtmenge der Zusammensetzung **X**, mindestens eines mineralischen Füllstoffs **F**, bei dem es sich um einen gemahlenen Quarz handelt, und

g. 0,4 bis 5 Gew.-% mindestens eines Wärmebeständigkeitsadditivs **J**.

8. Organopolysiloxanzusammensetzung **X** nach Anspruch 1, umfassend:

a. 40 bis 80 Gew.-% mindestens eines Organopolysiloxans **A** mit mindestens zwei siliciumgebundenen $C_2$-$C_6$-Alkenylgruppen pro Molekül,

b. 1 bis 20 Gew.-% mindestens eines Organopolysiloxans **B** mit mindestens zwei SiH-Einheiten und vorzugsweise mindestens drei SiH-Einheiten pro Molekül,

c. 2 bis 400 Gew.-ppm Platinmetall,

d. 0,3 bis 2,5 Gew.-% mindestens eines Porenbildners **D**, bei dem es sich um Wasser oder eine wässrige Emulsion handelt,

e. 3 bis 14 Gew.-% mindestens eines mineralischen Füllstoffs **E**, bei dem es sich um eine pyrogen hergestellte Kieselsäure mit einer spezifischen Oberfläche zwischen 100 und 300 $m^2$/g handelt,

f. 6 bis 25 Gew.-%, bezogen auf die Gesamtmenge der Zusammensetzung **X**, mindestens eines mineralischen Füllstoffs **F**, bei dem es sich um einen gemahlenen Quarz handelt,

g. 0,4 bis 5 Gew.-% mindestens eines Wärmebeständigkeitsadditivs **J**,

h. 0 bis 3000 Gew.-ppm eines Vernetzungsinhibitors **I** und

i. 0 bis 4 Gew.-% eines Organopolysiloxangummis **G** mit mindestens zwei siliciumgebundenen $C_2$-$C_6$-Alkenyl-

gruppen.

9. Zweikomponentensystem **P**, das ein Vorläufer der Organopolysiloxanzusammensetzung **X** gemäß einem der vorhergehenden Ansprüche ist und die Bestandteile **A**, **B**, **C**, **D**, **E**, **F** und **J** gemäß einem der vorhergehenden Ansprüche umfasst, wobei das Zweikomponentensystem **P dadurch gekennzeichnet ist, dass** es in zwei getrennten Teilen **P1** und **P2** vorliegt, die zum Mischen zur Bildung der Organopolysiloxanzusammensetzung **X** vorgesehen sind und die Bestandteile enthalten, und dass einer der Teile **P1** und **P2** den Katalysator **C** und den Porenbildner **D** umfasst und nicht das Organopolysiloxan **B** umfasst.

10. Silikonschaumstoff **M**, erhalten durch Vernetzung und/oder Härtung der Organopolysiloxanzusammensetzung **X** gemäß einem der Ansprüche 1 bis 8.

11. Verfahren zur Herstellung des Silikonschaumstoffs **M**, das folgende Schritte umfasst:

a) Bereitstellen eines Zweikomponentensystems **P**, eines Dreikomponentensystems **T** oder eines Multikomponentensystems, das alle der Komponenten der Organopolysiloxanzusammensetzung **X** gemäß einem der Ansprüche 1 bis 8 umfasst,
b) Mischen der beiden Teile des Zweikomponentensystems **P** bzw. der drei Teile des Dreikomponentensystems **T** bzw. aller Teile des Multikomponentensystems unter Erhalt der Organopolysiloxanzusammensetzung **X** und
c) Vernetzen- und/oder Härtenlassen der Organopolysiloxanzusammensetzung **X** unter Erhalt des Silikonschaumstoffs **M.**

12. Verwendung der Organopolysiloxanzusammensetzung X nach einem der Ansprüche 1 bis 8 oder des Silikonschaumstoffs **M** nach Anspruch 10 zur Herstellung von Füllschaumstoffen oder Schaumstoffdichtungen auf dem Bau-, Transport-, Elektroisolations- oder Elektrogerätesektor.

**Claims**

1. Organopolysiloxane composition **X**, precursor of a silicone foam **M**, comprising:

a. at least one organopolysiloxane **A** exhibiting, per molecule, at least two $C_2$-$C_6$ alkenyl groups bonded to the silicon,
b. at least one organopolysiloxane **B** exhibiting, per molecule, at least two SiH units and preferably at least three SiH units,
c. a catalytically effective amount of at least one hydrosilylation catalyst **C**, which is preferably a compound derived from at least one metal belonging to the platinum group,
d. at least one porogenic agent **D** which is water or an aqueous emulsion,
e. at least 3% by weight, with respect to the total amount of the composition **X**, of at least one inorganic filler **E** which is a fumed silica, the specific surface of which is between 100 and 300 $m^2/g$,
f. at least 6% by weight, with respect to the total amount of the composition **X**, of at least one inorganic filler **F** which is a ground quartz, and
g. at least one heat-resistance additive **J**,

**characterized in that** the ratio by weight of the quartz **F** to the fumed silica **E** is between 0.5 and 4.

2. Organopolysiloxane composition **X** according to Claim 1, in which the amount of inorganic filler **E** is between 3% and 14% by weight of said composition **X.**

3. Organopolysiloxane composition **X** according to Claim 1, in which the amount of inorganic filler **F** is between 6% and 25% by weight of said composition **X.**

4. Organopolysiloxane composition **X** according to Claim 1, in which the ratio by weight of the quartz **F** to the fumed silica **E** is between 1 and 3.6.

5. Organopolysiloxane composition **X** according to Claim 1, additionally comprising an organopolysiloxane gum **G** comprising at least two $C_2$-$C_6$ alkenyl groups bonded to the silicon.

6. Organopolysiloxane composition **X** according to Claim 1, additionally comprising an inhibitor **I**.

7. Organopolysiloxane composition **X** according to Claim 1, comprising:

   a. from 40% to 80% by weight of at least one organopolysiloxane **A** exhibiting, per molecule, at least two $C_2$-$C_6$ alkenyl groups bonded to the silicon,
   b. from 1% to 20% of at least one organopolysiloxane **B** exhibiting, per molecule, at least two SiH units and preferably at least three SiH units,
   c. from 2 to 400 ppm by weight of platinum metal,
   d. from 0.3% to 2.5% by weight of a porogenic agent **D** which is water or an aqueous emulsion,
   e. at least 3% by weight, with respect to the total amount of the composition **X**, of at least one inorganic filler **E** which is a fumed silica, the specific surface of which is between 100 and 300 $m^2$/g,
   f. at least 6% by weight, with respect to the total amount of the composition **X**, of at least one inorganic filler **F** which is a ground quartz, and
   g. from 0.4% to 5% by weight of at least one heat-resistance additive **J**.

8. Organopolysiloxane composition **X** according to Claim 1, comprising:

   a. from 40% to 80% by weight of at least one organopolysiloxane **A** exhibiting, per molecule, at least two $C_2$-$C_6$ alkenyl groups bonded to the silicon,
   b. from 1% to 20% by weight of at least one organopolysiloxane **B** exhibiting, per molecule, at least two SiH units and preferably at least three SiH units,
   c. from 2 to 400 ppm by weight of platinum metal,
   d. from 0.3% to 2.5% by weight of a porogenic agent **D** which is water or an aqueous emulsion,
   e. from 3% to 14% by weight of at least one inorganic filler **E** which is a fumed silica, the specific surface of which is between 100 and 300 $m^2$/g,
   f. from 6% to 25% by weight, with respect to the total amount of the composition **X**, of at least one inorganic filler **F** which is a ground quartz,
   g. from 0.4% to 5% by weight of at least one heat-resistance additive **J**,
   h. from 0 to 3000 ppm by weight of a crosslinking inhibitor **I**, and
   i. from 0% to 4% by weight of a diorganopolysiloxane gum **G** comprising at least two $C_2$-$C_6$ alkenyl groups bonded to the silicon.

9. Two-component system **P**, precursor of the organopolysiloxane composition **X** as defined in any one of the preceding claims and comprising the constituents **A, B, C, D, E, F** and **J** as defined in any one of the preceding claims, said two-component system **P** being **characterized in that** it is provided in two separate parts **P1** and **P2** intended to be mixed to form said organopolysiloxane composition **X** and comprising said constituents, and **in that** one of the parts **P1** or **P2** comprises the catalyst **C** and the porogenic agent **D** and does not comprise the organopolysiloxane **B**.

10. Silicone foam **M** obtained by crosslinking and/or curing of the organopolysiloxane composition **X** as defined in any one of Claims 1 to 8.

11. Process for the preparation of the silicone foam **M** comprising the following stages:

    a) providing a two-component system **P**, a three-component system **T** or a multicomponent system comprising all of the components of the organopolysiloxane composition **X** as defined in Claims 1 to 8,
    b) mixing the two parts of said two-component system **P** or the three parts of said three-component system **T** or all of the parts of the multicomponent system in order to obtain the organopolysiloxane composition **X** and
    c) leaving to crosslink and/or curing said organopolysiloxane composition **X** in order to obtain the silicone foam **M**.

12. Use of the organopolysiloxane composition **X** according to any one of Claims 1 to 8 or of the silicone foam **M** according to Claim 10 in the preparation of filling foams or foam seals in the construction, transportation, electrical insulation or domestic electric appliance field.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4189545 A
- US 4590222 A
- US 4418157 A
- US 6084002 A
- WO 2015004396 A
- WO 2015004397 A
- WO 2016075414 A
- WO 2016071651 A
- WO 2016071652 A
- WO 2016071654 A
- US 3159601 A
- US 3159602 A

- US 3220972 A
- EP 0057459 A
- EP 0188978 A
- EP 0190530 A
- US 3419593 A
- US 3715334 A
- US 3377432 A
- US 3814730 A
- FR 1126884 A
- FR 1136885 A
- FR 1236505 A
- GB 1024234 A

**Littérature non-brevet citée dans la description**

- **WALTER NOLL.** Chemistry and Technology of Silicones. Academic Press, 1968, 1-9